# EUROPEAN PATENT APPLICATION

(11) **EP 4 559 352 A1**
(43) Date of publication of application: **28.05.2025**
(21) Application number: 23212086.5
(22) Date of filing: 24.11.2023
(51) Int. Cl.: A44C 17/00, B44C 5/06, B32B 17/10, B32B 27/08, B32B 27/40, A44C 27/00

(54) **DECORATIVE ELEMENT**

(71) Applicant: D. Swarovski KG, 6112 Wattens (AT)
(72) Inventor: FUNDEL, Marina, 6112 Wattens (AT); FILIPOVIC-JOURKOVIC, Vesna, 6112 Wattens (AT); SCHIEFER, Dennis, 6112 Wattens (AT); SCHWIEGER, Sebastian, 6112 Wattens (AT); WÖRDENWEBER, Jan, 6112 Wattens (AT); ABENTHUNG, Robert, 6112 Wattens (AT); MONZ, Klaus, 6112 Wattens (AT)
(74) Representative: Keltie LLP

(57) **Abstract**

A decorative element (10, 110, 210) comprising a body (20, 120, 220) having a planar rear surface (22, 122, 222) and a faceted front surface (24,124, 224). The body (20, 120, 220) is at least partially transparent. The body (20, 120, 220) comprises a layer arrangement (30, 130, 230) on the planar rear surface (22, 122, 222) of the body (20, 120, 220). The layer arrangement (30, 130, 230) comprises a colour-imparting layer (32, 132, 232) and a reflective layer (34, 134, 234). The colour-imparting layer (32, 132, 232) is at least partially transparent, and is arranged between the planar rear surface (22, 122, 222) and the reflective layer (34, 134, 234).

## Description

### Field of the invention

The invention relates to decorative element such as a faceted stone.

### Introduction

Decorative elements such as faceted glass stones are used as adornments in many applications including jewellery, ornaments, homeware, fashion, textiles, and many other applications. Such decorative elements are often provided in many shapes, sizes and colours, and for maximum flexibility and creativity, it is desirable for a creator to have access to any combination of shapes, sizes and colours that they desire.

One desirable way of colouring glass stones is to incorporate chemical components, such as rare earth metals and their oxides, into the bulk glass to provide a particular colour effect - for example a particular shade of blue. Colouring bulk glass in this way provides a rich, deep hue that is not vulnerable to wear or damage.

For high quality decorative elements, the exact shade or hue of a particular colour should be consistent for all shapes and sizes of stones. However, when the same bulk glass composition is used to produce stones of different shapes and sizes, the size and shape of the stone - particularly its depth - will affect the hue that is observed. To achieve a consistent hue, the exact composition must therefore be tailored to the size and shape of the stone. This method is economical when producing large quantities of stones of the same size and shape, but it is not feasible for producing small quantities of a particular size, shape and colour combination.

It is known to apply coatings to faceted stones to provide surface colour effects. For example, a coloured, transparent coating may be applied to an upper surface of a gemstone. The gemstone is viewed through the coloured coating, giving a coloured appearance. While such coatings provide a coloured effect, the coatings are vulnerable to wear. If the stone incurs surface damage, the coating is chipped, revealing the colourless glass underneath. This may be particularly problematic where the stone is used in an application such that it is subject to frequent wear-and-tear: for example in fashion applications.

It is against this background that the invention has been devised.

### Summary of the invention

The invention resides in a decorative element comprising a body having a planar rear surface and a faceted front surface, the body being at least partially transparent, and a layer arrangement on the planar rear surface of the body. The layer arrangement comprises a colour-imparting layer and a reflective layer. The colour-imparting layer is at least partially transparent, and is arranged between the planar rear surface and the reflective layer.

When an observer observes the decorative element, light that is incident on the decorative element is transmitted through the body, and through the colour-imparting layer to the reflective layer. Because the colour-imparting layer is coloured, it acts as a wavelength filter, so that light passing therethrough is of a selected wavelength range corresponding to the colour of the colour-imparting layer. The light is reflected off the reflective layer, back through the colour-imparting layer and the body to the observer. The reflected light is of the selected wavelength range corresponding to the colour of the colour-imparting layer, so that the observer observes the coloured reflected light. The resulting appearance of the decorative element is therefore a coloured appearance.

The invention also extends to a method of making a decorative element. The method comprises providing a body having a planar rear surface and a faceted front surface, the body being at least partially transparent, and depositing a layer arrangement on the planar rear surface of the body. The layer arrangement comprises a colour-imparting layer that is at least partially transparent, and a reflective layer. The layer arrangement is deposited such that the colour-imparting layer is arranged between the planar rear surface and the reflective layer. Optionally, the colour-imparting layer may be deposited by spraying.

In the decorative element and/or the method, the body may be transparent, and the colour-imparting layer may be transparent. The body may be colourless.

In the decorative element and/or the method, the colour-imparting layer may comprise an organic matrix and a colourant, the organic matrix being at least partially transparent. The organic matrix may comprise a polymeric material, such as polyurethane.

In this case, in the method, a step of depositing the colour-imparting layer may comprise providing a mixture comprising the organic matrix, the colorant and a solvent, and applying the mixture to the body. Alternatively, depositing the colour-imparting layer may comprise providing a mixture comprising two or more components that can react to form the matrix, the colourant, and a solvent, and applying the mixture to the body. The two or more components may comprise, for example, a resin and a hardener that react to form the matrix.

The organic matrix may be transparent. The organic matrix may be colourless.

The solvent may comprise a single solvent material, or a mixture of solvent materials.

In the decorative element and/or the method, the colourant may comprise a dye or a pigment. The pigment may comprise a colourant material that is provided as particles. The colourant material may be an organic pigment, which may comprise organic compounds or metal organic compounds. Alternatively, the pigment may be an inorganic pigment, which may comprise metal and/or metal oxide materials.

Where the colourant comprises particles, the particles may, for example, have a size less than approximately 20 microns in diameter (meaning that at least 75% of the particles have a diameter less than 20 microns), preferably less than 5 microns in diameter (meaning that at least 75% of the particles have a diameter less than 5 microns).

In the decorative element and/or the method, the colour-imparting layer may comprise approximately 0.001 wt% to approximately 50 wt% colourant, preferably approximately 0.025 wt% to approximately 25 wt% colourant, most preferably approximately 0.05 wt% to approximately 20 wt% colourant. The colour-imparting layer may have a thickness of approximately 0.5 microns to approximately 20 microns.

In the decorative element and/or the method, the layer arrangement may further comprise an adhesion layer between colour-imparting layer and the reflective layer. The adhesion layer may be at least partially transparent, and is preferably substantially transparent. In this case, the method may comprise depositing an adhesion layer on the colour-imparting layer.

In the decorative element and/or the method, the layer arrangement may further comprise a protective layer, the reflective layer being arranged between the colour-imparting layer and the protective layer. In this case, the method may comprise depositing the protective layer over the reflective layer, optionally by spraying.

In the decorative element and/or the method, the protective layer may comprise an organic material, which may for example be a polymeric material. For example, the protective layer may comprise polyurethane. Where the colour-imparting layer comprises a matrix made of an organic material, the organic material of the protective layer and the organic material of the matrix may be the same: for example, both may be poly-urethane. In other embodiments the organic material of the protective layer and the organic material of the matrix may be different.

In the decorative element and/or the method, the body may comprise a transparent material. Optionally the body may be substantially colourless. The body may be made of glass, glass-ceramic, a plastics material, or a precious or semi-precious stone. In a particularly preferred embodiment, the body may be made of glass or a plastics materials, preferably a glass or plastics material having a refractive index of at least 1.50, and preferably at least 1.52.

In the decorative element and/or the method, the decorative element may be a flat-back crystal element.

### Description of the Figures

Embodiments of the invention will now be described, by way of example only, with reference to the drawings, in which:
Figure 1 is a cross-section of a decorative element according to the invention;
Figure 2 is a cross-section of another decorative element according to the invention;
Figure 3 is a cross-section of the decorative element of Figure 1, showing the path of light that is incident on the decorative element; and
Figure 4 is a cross-section of a further decorative element according to the invention.

### Description of Embodiments of the Invention

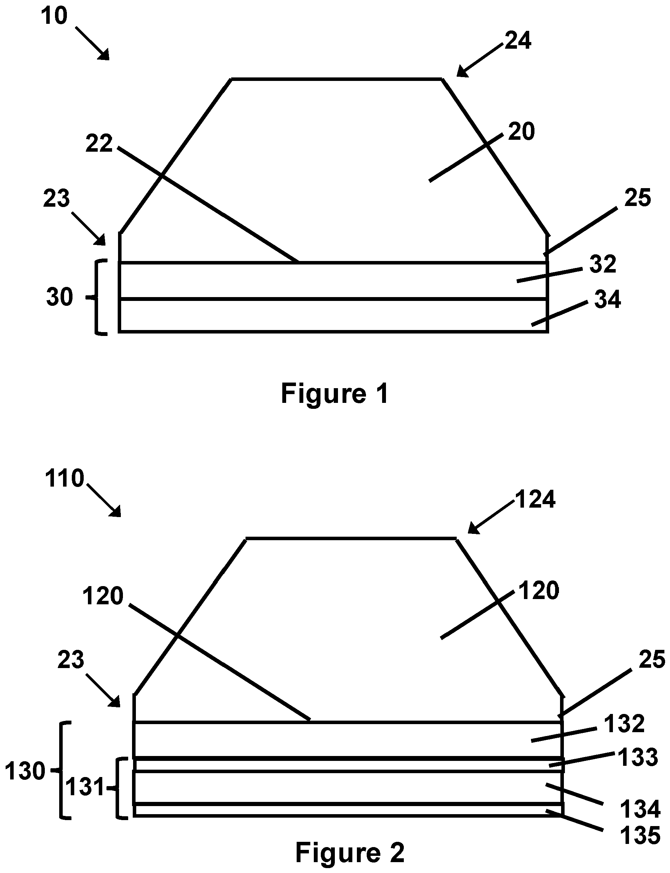

Referring to Figure 1, a decorative element 10 according to the invention comprises a body 20 having a planar rear surface 22 and a faceted front surface 24. In use, the planar rear surface 22 is typically affixed to an article or substrate, and the faceted front surface 24 is presented to a viewer. In this way, the viewer views the article through the faceted front surface 24.

A layer arrangement 30 is provided on the planar rear surface 22. The layer arrangement comprises a first layer 32 in the form of a colour-imparting layer, and a second layer 34 in the form of a reflective layer. The colour-imparting layer 32 is arranged between the planar rear surface 22 of the body 20, and the reflective layer 34.

The body 10 is at least partially transparent, such that at least some light that is incident on the front surface 24 is transmitted through the body to the layer arrangement 30. In preferred embodiments the body is fully transparent. The body may be colourless, such that substantially all light that is incident on the front surface 24 is transmitted through the body to the layer arrangement 30.

To this end, the body may be made of any suitable material that is at least partially transparent, such as a glass, glass ceramic, plastics material, or a precious or-semi precious stone. In preferred examples the body is made of glass or a plastics material, preferably a glass or plastics material having a refractive index of at least 1.50, and preferably at least 1.52, which is the minimum refractive index of crystal glass.

The body may take any suitable shape that includes a planar rear surface 22 and a faceted front surface 24. Elements having a planar rear surface 22 and a faceted front surface 24 are typically referred to as 'flat-back' stones or crystals: such stones are commonly available in many shapes and sizes. In this example, body comprises a girdle 23 between the planar rear surface 22 and the faceted front surface 24. A side wall 25 extends around a perimeter of the girdle 23.

The layer arrangement 30 may cover substantially all of the planar rear surface 22 of the body 20. In some embodiments a small peripheral region at the edge of the planar surface may not be covered by the layer arrangement. In other embodiments, the layer arrangement 30 may cover only part of the planar rear surface 22 of the body 20.

Embodiments are also envisaged in which the layer arrangement 30 extends beyond the planar rear surface 22 of the body 20 and covers part or all of the side wall 25 of the girdle 23.

The colour-imparting layer 32 is at least partially transparent, such that at least some incident light is transmitted therethrough to the reflective layer 34. Preferably the colour-imparting layer 32 is fully transparent. The colour-imparting layer 32 is coloured, such that it acts as a wavelength filter. For example, if the colour-imparting layer 32 is green, the colour-imparting layer 32 transmits light having a wavelength corresponding to a green colour, and absorbs light of other wavelengths.

In the embodiments illustrated, the colour-imparting layer 32 is applied directly on the planar rear surface 22 of the body 20, though embodiments are also envisaged in which intermediate layers are provided between the body 20 and the colour-imparting layer 32, where the intermediate layers are at least partially transparent.

In the embodiments shown, the colour-imparting layer 32 comprises a matrix and a colourant.

The material of the matrix is at least partially transparent, and is preferably transparent to light of all wavelengths. The matrix material is preferably organic, for example a polymeric material, and in one example, the organic material of the matrix is polyurethane. The matrix material may be made, for example, from a two-component system comprising a resin and a hardener.

The colourant may be provided in any suitable form, for example as a pigment or dye. In this example, the colourant is provided as a pigment in the form of particles of a colourant material, where the colourant material comprises metal organic complexes and/or heterocyclic organic complexes suspended in the organic matrix. Suitable examples of colourant material are heterocyclic nickel azo complexes (yellow), perylene derivatives (red), and copper phthalocyanine complexes (green/blue).

The particles can be specially selected to produce a desired colour. The particles may be of any suitable size: in one example, the particles are substantially spherical and the majority of particles (i.e. at least 75%) are less than 20 microns in diameter, preferably less than 5 microns in diameter.

Any suitable proportion of colourant may be used: for example, the colour-imparting layer 32 may comprise approximately 0.001 wt% to approximately 50 wt% colourant, preferably approximately 0.025 wt% to approximately 25 wt% colourant, most preferably approximately 0.05 wt% to approximately 20 wt% colourant. This proportion of colourant has been found to provide a suitable balance between a strong, intense colour and sufficient transparency of the colour-imparting layer.

The matrix and colourant are combined together in the colour-imparting layer 34 to provide a layer that is transparent and coloured.

The colour-imparting layer 32 may be of any suitable thickness: for example, the thickness may be between approximately 0.5 microns and approximately 20 microns. This thickness range provides a balance between providing a strong, intense colour and allowing sufficient light to reach the reflective layer.

The reflective layer 34 is configured to reflect light. To this end, the reflective layer 34 defines a reflective surface that faces towards the colour-imparting layer 32. The reflective layer 34 may be made of any suitable material, for example a metal such as silver, or a dielectric material. The reflective layer 34 may also comprise a stack of layers. The reflective layer 34 may be of any suitable thickness, for example a thickness of approximately 50 to approximately 1500 nm.

In the embodiment of Figure 2, the reflective layer 134 forms part of a reflective layer system 131 that includes a plurality of layers. In addition to the reflective layer 134, the reflective layer system also comprises an optional adhesion layer 133 arranged between the colour-imparting layer 132 and the reflective layer 134, and one or more optional further layers 135 arranged over the reflective layer 134. The adhesion layer 133 promotes adhesion of the reflective layer 134 to the colour-imparting layer 132. The adhesion layer 133 is at least partially transparent, and may be, for example, a very thin layer of a suitable metal oxide. A suitable thickness may be 1 to 50 nm. The further layer(s) may be, for example, metal, metal oxide or metal nitride layers, having a suitable thickness, such as approximately 50 to approximately 1500 microns.

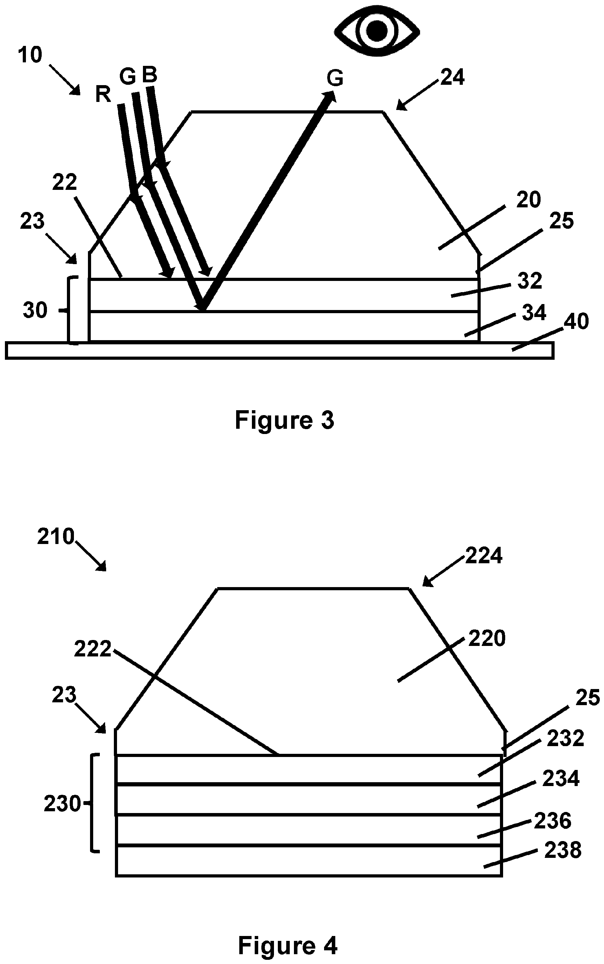

Referring to Figure 3, when the decorative element 40 is in use, it will typically be affixed to a substrate 40, such that the rear planar surface 22 of the body 20 faces towards the substrate 40, and the faceted upper surface 24 of the body 20 faces upward. When white light is incident on the decorative element, the white light enters the body 20 through the faceted front surface 24. If the body 20 is colourless, all wavelengths are transmitted through the body to the colour-imparting layer. The colour-imparting layer 32 is transparent, but coloured: it therefore transmits light of a particular wavelength (in this example wavelengths corresponding to green light), and absorbs light of other wavelengths (e.g. wavelengths corresponding to red and blue). When the transmitted light reaches the reflective layer 34, is reflected back through the colour-imparting layer 32 and the body 20, where it exits the body 20 through the faceted front surface 24. An observer will therefore observe green light, and will perceive the body 20 of the decorative element 10 as being green.

The combination of the transparent colour-imparting layer 32 and the reflective layer 34 therefore provides a colour effect, such that the body 20 appears coloured to an observer, even if it is colourless. Because the colour-imparting layer 32 is applied on the rear, planar surface 22 of the body, which is typically affixed to a substrate during use, the colour-imparting layer 32 is protected, and cannot be easily damaged.

By virtue of this layer arrangement, bodies 20 can be produced in bulk from a colourless transparent material (such as colourless glass), and different colour-imparting layers 30 can be applied with different colour effects, to produce a wide variety of different colours. Such layers can easily be applied with simple processes, such as spray coating or physical vapour deposition processes. A particular benefit is that it is easy to change the composition of the colour-imparting layer 34 and to do so in small batches of different colours if required.

Figure 4 illustrates another decorative element 210. The decorative element 210 of Figure 2 is substantially the same as that of Figure 1, except that the layer arrangement 230 further comprises a protective layer 236. The protective layer 236 is arranged such that the reflective layer 234 is arranged between the colour-imparting layer 232 and the protective layer 236. The embodiment of Figure 4 may also optionally incorporate the adhesion layer of Figure 2.

The protective layer 236 provides additional protection to the reflective layer 234 and the colour-imparting layer 232, particularly when the decorative element 210 has not yet been affixed to a substrate for use.

The protective layer 236 may be, for example, an organic protective layer that comprises an organic material. The organic material may optionally be the same material as the matrix material of the colour-imparting layer 234: for example, polyurethane. The thickness of the organic material may be any suitable thickness, for example 0.5 to 30 microns.

The protective layer may optionally comprise a layer of hot-melt adhesive 238 (i.e. an adhesive that is in solid form at room temperature but will melt when heated, and adhere to a surface when pressed against it). Such hot-fix adhesives are commonly used on flat-back stones. A suitable thickness is, for example, 50 to 500 microns. In this case a layer of primer may also be provided between the protective layer 236 and the layer of hot melt adhesive 238.

In this example, a layer of hot-melt adhesive 238 is used in addition to the protective layer 236, as shown in Figure 4. However embodiments are also envisaged in which the hot-melt layer defines the protective layer 236.

To make the decorative element 10, 110, 210 of any of Figures 1 to 4, the body 20 is first provided, and the layer arrangement 30, 130, 230 is deposited on the rear planar surface 22, 122, 222 of the body 20, 120, 220.

First, a colour-imparting layer 34, 134, 234 is deposited on the rear planar surface 22, 122, 222 of the body 20, 120, 220.

If necessary, the body is pre-treated to ensure a smooth clean surface: for example if the body is made of glass, the body may be pre-treated with e.g. plasma ionisation, flame treatment and/or cleaning with a solvent.

The matrix material and colourant are mixed together with a solvent or thinner. The solvent may comprise a single solvent material, or it may comprise a mixture of solvent materials.

Where the matrix material is provided as a two-component resin, both components are mixed together with the colourant and solvent. The solvent may be any suitable solvent material, such as ethoxypropyl acetate, n-butyl acetate, methoxypropanol, methoxypropyl acetate, ethyl acetate, naphtha, methoxy propanol and/or mixtures thereof. The colourant may be provided as a pre-mixture of the solvent and colour-imparting particles (for example, a suspension or solution of metal organic complexes or heterocyclic organic complexes in a solvent). The proportion of solvent is selected such that the mixture has a viscosity that is suitable for spraying.

The materials are mixed by any appropriate method, for a mixing period. For example the materials may be mixed in a rotary mixer, at a speed of between 60 and 120 rpm, for a period of between 2 and 15 minutes.

The mixture is then sprayed onto the planar surface 22, 122, 222 by spray coating.

The layer is optionally allowed to dry at room temperature for a drying period. The drying period may be up to approximately 180 minutes, preferably up to approximately 120 minutes, most preferably up to approximately 75 minutes.

The layer is then cured, optionally at a temperature above room temperature. For example, the body and layer may be heated to a curing temperature of up to approximately 125 °C, preferably between approximately 50 °C and approximately 120 °C, most preferably between approximately 60 °C and approximately 110 °C. The layer may be allowed to cure for a curing period, which may be between approximately 10 minutes and approximately 24 hours, preferably between approximately 20 minutes and 18 hours, most preferably between approximately 30 minutes and approximately 13 hours.

The reflective layer 34, 234 (or reflective layer system 131) is then deposited by a suitable deposition process, such as a PVD process. If an adhesion layer 133 is used, the adhesion layer is first applied using a suitable PVD process. The reflective layer 34, 134, 234 is then applied using a suitable PVD process. For example, if the reflective layer 34, 134, 234 is a metal such as silver, the layer may be deposited by sputtering. If a further layer 135 is used, the further layer is then deposited by a suitable PVD process.

Where a protective layer 236 is used, the protective layer 236 is then deposited over the reflective layer 234 or reflective layer system 131. First, the reflective layer 234 (or the outer layer of reflective layer system 131) may be pre-treated to ensure a smooth clean surface for example with e.g. plasma ionisation, a flame treatment and/or cleaning with a solvent.

Where the protective layer 236 is an organic protective layer, the organic protective layer 236 may be applied by spraying. For example, if the organic protective layer is a two-component resin, the two components may be mixed, and the mixture sprayed on by a suitable spraying means.

The organic protective layer 236 is optionally allowed to dry at room temperature for a drying period. The drying period may be up to approximately 180 minutes, preferably between approximately 30 minutes and approximately 120 minutes, most preferably between approximately 45 minutes and approximately 75 minutes.

The organic protective layer 236 is then cured, optionally at a temperature above room temperature. For example, the body 220 and organic protective layer 236 may be heated to a curing temperature of up to approximately 180 °C, preferably between approximately 50 °C and approximately 160 °C, most preferably between approximately 60 °C and approximately 110 °C. The organic protective layer 238 may be allowed to cure for a curing period, which may be between approximately 10 minutes and approximately 24 hours, preferably between approximately 20 minutes and 18 hours, most preferably between approximately 30 minutes and approximately 13 hours.

If required, the organic protective layer 236 may be applied in multiple stages: a first organic protective layer may be applied and allowed to cure, and a second organic protective layer may be applied in the same manner on top of the first organic protective layer, to increase the overall thickness of the organic protective layer 236.

If the protective layer is a hot-fix layer, a layer of primer may be applied over the reflective layer 234 or reflective layer system 131, followed by a layer of hot-fix adhesive.

In some embodiments, such as that shown in Figure 4, the protective layer 236 may comprise both an organic protective layer 236 and a hot-fix layer 238. In such embodiments, the organic protective layer 236 is applied as described above, and a primer layer and subsequent hot-fix layer 238 is then applied over the organic protective layer 236.

### Example

A sample was prepared comprising a flat-back glass crystal with a coating arrangement applied to the rear planar surface. A colour-imparting layer was made by mixing the following constituents:
Matrix: Two-part polyurethane resin (part 1: acrylic resin dissolved in organic solvent;
part 2: oligomeric diisocyanate in an organic solvent).
Thinner: ethoxypropyl acetate
Colourant: Yellow pigment comprising particles of heterocyclic nickel azo complex in aldehyde solvent.
Particle size: at least 90% of particles less than 5 microns in diameter.

The matrix and thinner components were mixed in the ratios of:
Acrylic resin - 1 part
Oligomeric diisocyanate - 1 part
Thinner - 1.6 parts

7.5 wt% colourant was added to the mixture.

The coating mixture was mixed in a rotary mixer for 10 minutes at 60 rpm.

The coating was applied to the flat surface of the stone using commercial spraying apparatus with an atomizer flow rate of 110 L/min and a fan air flow rate of 200 L/min. The spraying apparatus was set to a position of 200 mm above the planar surface.

After the colour-imparting layer was applied, the sample was left to air dry overnight (for approximately 12 hours) at room temperature. The sample was then cured at 95 - 115 °C for two hours. Once the colour-imparting layers had cured, an adhesion layer was applied using PVD, followed by a reflective layer of silver applied by sputtering.

The resulting decorative element was found to have a high-quality coloured appearance. From all viewing angles, the decorative element appeared yellow in colour.

## Claims

1. A decorative element comprising:
a body having a planar rear surface and a faceted front surface, the body being at least partially transparent;
a layer arrangement on the planar rear surface of the body, the layer arrangement comprising:
a colour-imparting layer; and
a reflective layer;
the colour-imparting layer being at least partially transparent, and being arranged between the planar rear surface and the reflective layer.

2. The decorative element of Claim 1, wherein the colour-imparting layer comprises an organic matrix and a colourant, the organic matrix being at least partially transparent.

3. The decorative element of Claim 2, wherein the organic matrix comprises polyurethane.

4. The decorative element of Claim 2 or Claim 3, wherein the colourant comprises a colorant material that comprises a metal organic complex and/or a heterocyclic organic complex and/or a metal oxide and/or a metal.

5. The decorative element of any of Claims 2 to 4, wherein the colourant comprises particles of a colorant material.

6. The decorative element of any preceding claim, wherein the colour-imparting layer comprises approximately 0.001 wt% to approximately 50 wt% colourant, preferably approximately 0.025 wt% to approximately 25 wt% colourant, most preferably approximately 0.05 wt% to approximately 20 wt% colourant.

7. The decorative element of any preceding claim, wherein the colour-imparting layer has a thickness of approximately 0.5 microns to approximately 20 microns.

8. The decorative element of any preceding claim, wherein the layer arrangement further comprises a protective layer, the reflective layer being arranged between the colour-imparting layer and the protective layer.

9. The decorative element of Claim 8, wherein the protective layer comprises an organic material, optionally wherein the organic material is polyurethane.

10. A method of making a decorative element, the method comprising:
providing a body having a planar rear surface and a faceted front surface, the body being at least partially transparent;
depositing a layer arrangement on the planar rear surface of the body, the layer arrangement comprising a colour-imparting layer that is at least partially transparent, and a reflective layer, such that the colour-imparting layer is arranged between the planar rear surface and the reflective layer.

11. The method of Claim 10, comprising depositing a colour-imparting layer on the planar rear surface of the body.

12. The method of Claim 10 or Claim 11 comprising depositing the colour-imparting layer by spraying.

13. The decorative element or method of any preceding claim, wherein the body comprises a transparent material, optionally wherein the body is substantially colourless.

14. The decorative element or method of any preceding claim, wherein the body is made of glass or a plastics material.
